# FASCICULE DE BREVET EUROPEEN

(11) **EP 1 011 333 B1**
(45) Date de publication et mention de la délivrance du brevet: **24.10.2001**
(21) Numéro de dépôt: 98922877.0
(22) Date de dépôt: 27.04.1998
(51) Int. Cl.: A21C 1/02

(54) **MACHINE DE FABRICATION ET DE STOCKAGE DE LEVAIN NATUREL LIQUIDE**
GERÄT ZUR HERSTELLUNG UND SPEICHERUNG VON NATÜRLICHEM FLÜSSIGEN SAUERTEIG
MACHINE FOR MAKING AND STORING NATURAL LIQUID LEAVEN

(30) Priorité: 25.04.1997 FR 9705160
(43) Date de publication de la demande: 28.06.2000
(73) Titulaire: VMI, 85600 Montaigu (FR)
(72) Inventeur: GIRARD, Guy, F-85130 Les Landes Genusson (FR); ALHINC, Patrick, F-44190 Clisson (FR)
(74) Mandataire: Derambure, Christian
(86) Numéro de dépôt international: FR9800843
(87) Numéro de publication internationale: WO9848631

(56) Documents cités:
- BE-A- 530 468
- DE-B- 1 082 882
- DE-C- 56 989
- DE-C- 293 900
- FR-A- 1 053 466
- GB-A- 302 152

## Description

La présente invention concerne une machine de fabrication et de stockage de levain naturel liquide.

On connaît par le document FR-A-2 716 337 une telle machine comprenant essentiellement un premier organe rotatif à au moins une pale de brassage d'un mélange d'eau et de farine introduit dans une cuve et permettant de fabriquer le levain et un second organe rotatif de brassage dont l'axe de rotation est excentré par rapport à l'axe de rotation du premier organe rotatif et portant au moins une pale, la ou les pale(s) du premier organe ayant une forme complémentaire des pales du deuxième organe de façon à permettre le passage des pales du deuxième organe à travers les pales du premier organe.

Cependant, cette machine connue exige des temps de fermentation du levain extrêmement longs et un trop grand nombre de modes opératoires pour que la totalité du levain contenu dans la cuve soit prête à l'utilisation du fait que l'opérateur doit tout d'abord sur une période de 3 jours charger chaque jour la cuve d'un tiers de mélange d'eau et de farine de façon que la totalité du levain dans la cuve soit prête à l'utilisation au quatrième jour. De plus, cette machine connue oblige l'utilisateur à laisser subsister au fond de la cuve une quantité minimum de levain, de l'ordre de 20 %. Enfin, cette machine connue nécessite de la part de l'opérateur un trop grand nombre de réglables complexes selon lesquels les pales des deux organes rotatifs tournent dans un cycle continu puis avec des cycles intermittents ajustables. En d'autres termes, la machine telle qu'enseignée dans ce document antérieur ne permet pas d'assurer une reproductibilité correcte de la fermentation du levain.

La présente invention a pour but d'éliminer les inconvénients ci-dessus de la machine connue.

DE-C-56989 montre une machine de fabrication et de stockage de levain comportant les caractéristiques du préambule de la revendication 1.

L'invention propose une machine de fabrication et de stockage de levain naturel liquide obtenu à partir de matières premières à base d'eau et de farine, comprenant une cuve cylindrique dans laquelle sont introduites les matières premières et équipée d'un dispositif agitateur permettant le brassage des matières premières et d'un moyen d'évacuation du levain fabriqué, le dispositif agitateur comprenant un premier organe agitateur rotatif agencé également pour racler la paroi interne et une partie du fond de la cuve et un second organe agitateur rotatif, et qui est caractérisée en ce que le second organe agitateur est monté à rotation au voisinage du fond de la cuve et tourne à une vitesse de rotation supérieure à celle du premier organe agitateur de manière à diminuer le temps de fermentation du levain.

De préférence, la vitesse de rotation du second organe agitateur est comprise entre environ 500 tours/min et environ 3000 tours/min et celle du premier organe agitateur est de l'ordre de 5 à 30 tours/min.

De préférence, le second organe agitateur a un diamètre externe compris entre 0,2 et 0,6 fois le diamètre interne de la cuve.

Avantageusement, le second organe agitateur comprend au moins une roue sensiblement parallèle au fond de la cuve et dont l'axe de rotation est perpendiculaire à ce fond.

Le second organe agitateur comprend une autre roue jumelée à la roue précédente.

Chaque roue comprend un moyeu et des dents périphériques solidaires du moyeu s'étendant perpendiculairement à celui-ci alternativement vers le haut et vers le bas.

Le moyeu de la roue comprend un certain nombre d'orifices traversants s'étendant sensiblement suivant une même circonférence et, de préférence, les orifices ont chacun la forme d'une lumière oblongue dont les deux extrémités ont des diamètres différents.

La roue est portée par un arbre moteur traversant le fond de la cuve et entraîné par un moto-réducteur solidaire de la face extérieure de la paroi de fond de la cuve et le premier organe agitateur comprend un arbre de support de deux pales identiques parallèles opposées de raclage, centré par rapport à la cuve et fixé amoviblement à un arbre moteur monté à rotation dans un boîtier s'étendant en partie supérieure de la cuve radialement à celle-ci et contenant un mécanisme de liaison de l'arbre moteur du premier organe agitateur à un autre moto-réducteur solidaire du châssis de la machine.

L'arbre moteur de la roue est centré ou bien excentré par rapport à la cuve.

L'invention sera mieux comprise et d'autres buts, caractéristiques, détails et avantages de celle-ci apparaîtront plus clairement dans la description explicative qui va suivre faite en référence aux dessins schématiques annexés donnés uniquement à titre d'exemple illustrant un mode de réalisation de l'invention et dans lesquels :
La figure 1 est une vue en coupe partielle d'une machine de fermentation conforme à l'invention.
La figure 2 est une vue en perspective d'une roue utilisée dans la cuve de la machine de la figure 1.
La figure 3 est une vue de dessus agrandie de la roue de la figure 2 montrant en partie la façon dont sont pliées les dents de cette roue.

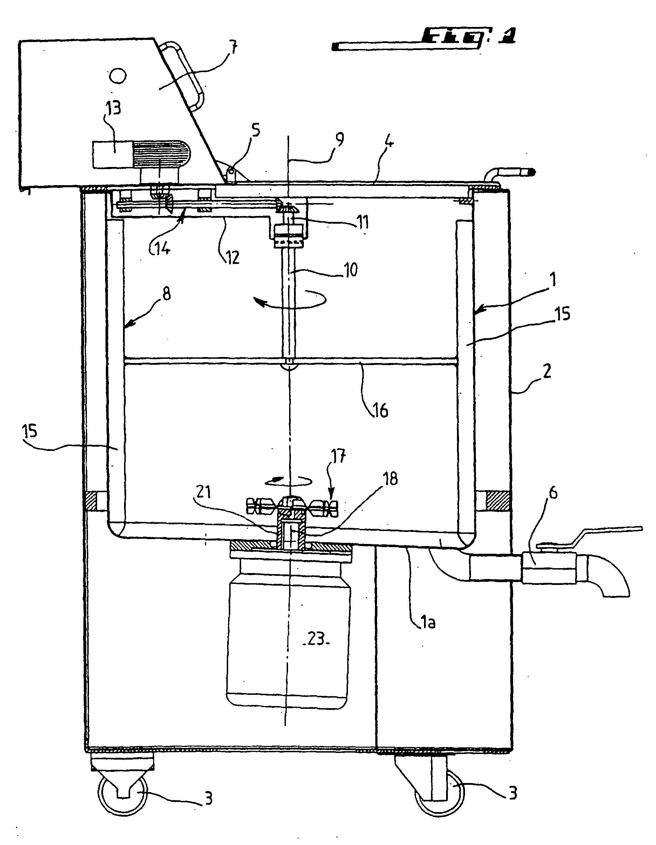

En se reportant à la figure 1, la machine de l'invention permettant de fabriquer et de stocker du levain naturel liquide obtenu à partir de matières premières à base d'eau et de farine, comprend une cuve cylindrique 1 logée dans un bâti de support 2 pouvant être déplaçable en étant monté sur des roulettes 3.

La cuve 1 peut être fermée par un couvercle 4 monté pivotant relativement au bâti 2 par une articulation horizontale 5.

La cuve 1 est de plus équipée d'un dispositif agitateur permettant le brassage des matières premières à base d'eau et de farine introduites dans la cuve et d'un moyen 6, tel qu'une vanne, d'évacuation du levain fabriqué et disposé au voisinage d'un bord de la paroi de fond la de la cuve, cette paroi pouvant être inclinée par rapport à l'horizontale pour favoriser l'écoulement du levain fabriqué vers le moyen d'évacuation 6.

Comme cela est déjà connu, la cuve est également pourvue en sa partie supérieure d'une grille relevable de résistance suffisante pour recevoir des sacs de farine qui doit être déversée dans la cuve et de moyens de production de froid et de chauffage (non représentés) commandés par une unité de commandé 7 permettant de régler la température de chauffage du mélange dans la cuve à la température de fermentation recherchée, situé habituellement entre 20°C et 40°C. L'unité de commande 7 commande les moyens de production de froid, dont le fluide frigorigène circule à travers un serpentin dans le fond la de la cuve 1, pour arrêter la fermentation et conserver le levain naturel liquide fabriqué.

Le dispositif agitateur comprend un premier organe agitateur rotatif 8, dont l'axe de rotation 9 est coaxial à l'axe longitudinal de la cuve 1, et comprenant un arbre central 10 fixé amoviblement et coaxialement, par des moyens d'accouplement rapide appropriés, à un arbre moteur central 11 monté à rotation dans un boîtier ou carter 12 solidaire du bâti 2 et s'étendant radialement à la cuve 1 en partie supérieure de celle-ci. L'arbre moteur 11 est entraîné en rotation par un moto-réducteur 13 par l'intermédiaire d'un mécanisme d'entrainement 14 logé dans le boîtier 12. Un tel mécanisme 14, connu en soi, n'a pas à être détaillé. Le moto-réducteur 13 est logé dans le châssis de l'unité de commande 7 en partie supérieure du bâti 2.

L'arbre 10 du premier organe rotatif 8 porter à son extrémité inférieure, deux pales identiques parallèles opposées 15, par exemple en Téflon, fixées à un bras transversal de support 16 solidaire de l'extrémité inférieure de l'arbre 10. Les pales 15 ont un diamètre externe supérieur au diamètre interne de la cuve 1 pour permettre le raclage de la face intérieure de la paroi latérale de la cuve 1 et ont chacune de leur extrémité libre inférieure en contact avec la face intérieure de la paroi de fond la de la cuve pour permettre le raclage d'une partie annulaire correspondante de cette face.

Le dispositif agitateur comprend également un second organe agitateur rotatif 17 monté à rotation au voisinage du fond de la cuve 1 entre les deux pales 15 de l'organe 8 et donc dans une partie de la cuve 1 distincte de la partie de cette cuve située dans le trajet de brassage des pales 15 du premier organe rotatif 8.

Le second organe agitateur 17, dont l'axe de rotation 18 est sensiblement perpendiculaire à la paroi de fond la de la cuve 1, est de préférence constitué par une roue ou "turbine" s'étendant au-dessus de la paroi de fond 1a dans un plan sensiblement parallèle à cette paroi. L'axe de rotation de ce second organe peut être centré par rapport à la cuve 1 de sorte que l'organe 17 est concentrique au premier organe agitateur 8, mais cet axe de rotation peut également être décentré.

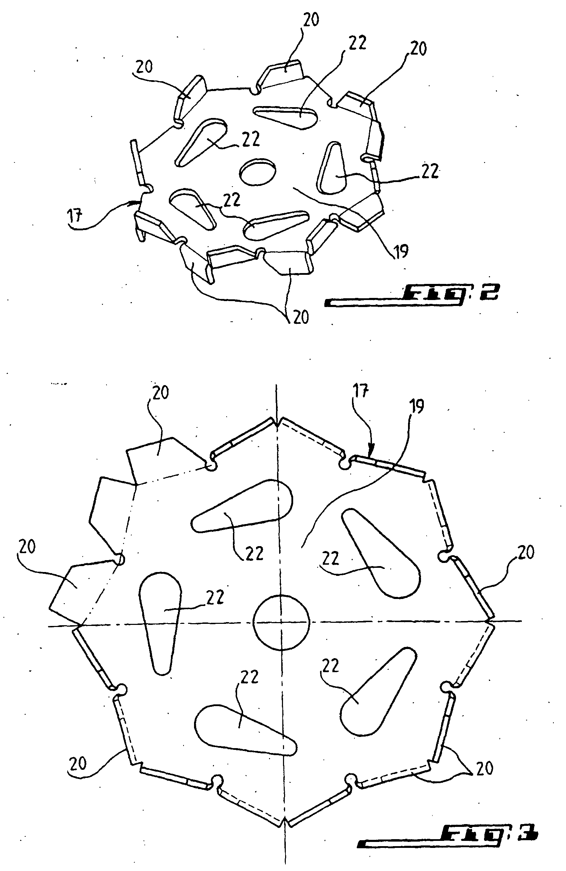

Comme cela est mieux représenté aux. figures 2 et 3, la roue 17 comprend une partie formant moyeu 19 et un certain nombre de dents 20 venant de matière et situées sur la périphérie externe de la partie formant moyeu 19 en s'étendant perpendiculairement à celle-ci alternativement vers le haut et vers le bas. Chaque dent 20, comme cela ressort de la figure 3, est amenée en position perpendiculaire à la partie formant moyeu 19 par pliage autour d'une ligne de pliage symbolisée en traits mixtes sur cette figure. Cette configuration des dents 20 permet d'utiliser la roue 17 dans un sens de rotation ou dans l'autre par simple retournement de la roue sur son arbre d'entraînement 21. La partie formant moyeu 19 de la roue 17 comporte également un certain nombre d'orifices traversants ou ajours 22 situés sur une même circonférence et dans le cas présent chacun en forme de lumière oblongue dont les deux extrémités ont des diamètres différents, étant bien entendu que ces orifices 22 peuvent avoir une toute autre forme, telle que par exemple une forme circulaire.

L'arbre de support 21, traversant la paroi de fond 1a de la cuve 1, est entraîné par un moto-réducteur 23 fixé à la face externe de cette paroi. Le second organe agitateur 17 peut avoir une autre configuration que celle représentée aux figures 2 et 3, et, en tout cas, il est important que sa vitesse de rotation soit nettement supérieure à la vitesse de rotation du premier organe agitateur 8 de manière à accélérer la fermentation du levain dans la cuve 1 tout en mélangeant intimement le mélange de farine et d'eau. De préférence, la vitesse de rotation rapide du second organe agitateur 17 est comprise entre environ 500 tours/min et environ 3000 tours/min (soit une vitesse périphérique supérieure à 7 m/s) pour une vitesse de rotation lente du premier organe agitateur 8 de l'ordre de 5 à 30 tours par minute. Des essais ont montré que des résultats meilleurs notamment quant à la diminution du temps de fermentation du levain sont obtenus avec le second organe agitateur 17 ayant un diamètre externe compris entre 0,2 et 0,6 fois le diamètre interne de la cuve 1.

Selon la machine de fermentation de l'invention ci-dessus décrite, et contrairement aux machines connues jusqu'à maintenant, l'opérateur peut introduire une quantité d'eau et de farine permettant de pratiquement remplir la cuve et, après réglage des moyens de chauffage à la température de fermentation recherchée du mélange, l'utilisateur commande. les rotations aux vitesses différentes mentionnées précédemment des deux organes agitateurs 8 et 17 jusqu'à ce que ces organes permettent d'obtenir une bonne homogénéité du mélange dont la fermentation a été accélérée grâce à ces deux organes agitateurs, notamment le second organe agitateur 17. Ainsi, il a été constaté que grâce à l'invention le levain naturel liquide est utilisable au bout d'une période qui correspond à une diminution considérable du temps de fermentation de ce levain. Ceci est notamment important au démarrage de la production en comparaison à la machine connue décrite précédemment qui nécessite quatre jours avant que le levain soit utilisable. Par exemple, ce temps de fermentation a été diminué d'au moins de 25% par rapport aux temps de fermentation habituels. Une fois que le mélange intime est réalisé et que la fermentation est terminée, l'utilisateur peut vider tout le levain fabriqué de la cuve 1 sans laisser subsister au fond de cette cuve une certaine quantité minimum de levain comme cela a été obligatoirement le cas dans la machine connue antérieurement. Autrement dit, l'utilisateur a rapidement à sa disposition du levain naturel liquide qu'il peut extraire en totalité ou non de la cuve 1, suivant la quantité souhaitée de levain à utiliser et ce sans passer par des modes opératoires complexes de commande à cycle continu et intermittents des organes agitateurs et de rechargement de la cuve en matières premières comme dans l'art antérieur conduisant à un moins bon contrôle de la fermentation du levain naturel.

Bien entendu, diverses modifications peuvent être apportées à la machine sans sortir du cadre des revendications. Ainsi, le second organe agitateur peut comporter deux roues 17, identiques ou non, qui sont jumelées de façon à diminuer davantage le temps de fermentation du levain. De plus, le premier organe agitateur 8 peut ne comporter qu'une seule pale ou avoir une structure différente dès l'instant où il n'interfère pas avec le fonctionnement du second organe agitateur 17.

## Revendications

1. Machine de fabrication et de stockage de levain naturel liquide obtenu à partir de matières premières à base d'eau et de farine, comprenant une cuve cylindrique (1) fixe dans laquelle sont introduites les matières premières et équipée d'un dispositif agitateur permettant le brassage des matières premières et d'un moyen (6) d'évacuation du levain fabriqué, le dispositif agitateur comprenant un premier organe agitateur rotatif (8) agencé également pour racler la paroi interne et une partie du fond de la cuve (1) et un second organe agitateur rotatif (17), **caractérisée en ce que** le second organe agitateur (17) est monté à rotation au voisinage du fond de la cuve (1) et tourne à une vitesse de rotation supérieure à celle du premier organe agitateur (8) de manière à diminuer le temps de fermentation du levain.

2. Machine selon la revendication 1, **caractérisée en ce que** la vitesse de rotation du second organe agitateur (17) est comprise entre environ 500 tours/min et environ 3000 tours/min et celle du premier organe agitateur (8) est de l'ordre de 5 à 30 tours/min.

3. Machine selon la revendication 1 ou 2, **caractérisée en ce que** le second organe agitateur (17) a un diamètre externe compris entre 0,2 et 0,6 fois le diamètre interne de la cuve (1).

4. Machine selon l'une des revendications précédentes, **caractérisée en ce que** le second organe agitateur (17) est indépendant du premier organe agitateur (8) et comprend au moins une roue (17) sensiblement parallèle au fond de la cuve (1) et dont l'axe de rotation (18) est perpendiculaire à ce fond.

5. Machine selon la revendication 4, **caractérisée en ce que** le second organe agitateur précité comprend une autre roue (17) jumelée à la roue précitée.

6. Machine selon la revendication 4 ou 5, **caractérisée en ce que** la roue (17) comprend un moyeu (19) et des dents périphériques (20) solidaires du moyeu (19) s'étendant perpendiculairement à ce moyeu alternativement vers le haut et vers le bas.

7. Machine selon la revendication 6, **caractérisée en ce que** le moyeu (19) de la roue (17) comprend un certain nombre d'orifices traversants (22) s'étendant sensiblement suivant une même circonférence.

8. Machine selon la revendication 7, **caractérisée en ce que** les orifices (22) ont chacun la forme d'une lumière oblongue dont les deux extrémités ont des diamètres différents.

9. Machine selon l'une des revendications 4 à 8, **caractérisée en ce que** la roue (17) est portée par un arbre moteur (21) traversant la paroi de fond (1a) de la cuve (1) et entraîné par un moto-réducteur (23) solidaire de la face extérieure de la paroi de fond (1a) de la cuve et **en ce que** le premier organe agitateur (8) comprend un arbre de support (10) de deux pales identiques parallèles opposées de raclage (15), centré par rapport à la cuve (1) et fixé amoviblement à un arbre moteur (11) monté à rotation dans un boîtier (12) s'étendant en partie supérieure de la cuve (1) radialement à celle-ci et contenant un mécanisme de liaison de l'arbre moteur (11) à un autre moto-réducteur (13) solidaire du bâti (2) de la machine.

10. Machine selon la revendication 9, **caractérisée en ce que** l'arbre moteur (21) de la roue (17) est centré par rapport à la cuve (1), de sorte que la roue (17) est concentrique au premier organe agitateur (8).

11. Machine selon la revendication 9, **caractérisée en ce que** l'arbre moteur (21) de la roue (17) est décentré par rapport à la cuve (1).

## Patentansprüche

1. Maschine zur Herstellung und Lagerung von flüssigem Vorteig im Rohzustand aus Rohmaterial auf Wasser- und Mehlbasis, umfassend einen festen zylindrischen Behälter (1), in den das Rohmaterial eingeführt wird, und ausgerüstet mit einer Rührvorrichtung, die das Vermischen des Rohmaterials erlaubt, und einem Austragmittel (6) des verarbeiteten Vorteigs, wobei die Rührvorrichtung ein erstes rotierendes Rührorgan (8) umfaßt, das ebenfalls angeordnet ist, um die Innenwand und einen Teil des Bodens des Behälters (1) abzuschaben, und ein zweites in Rotation Rührorgan (17), **dadurch gekennzeichnet, daß** das zweite Rührorgan (17) rotierend in der Umgebung des Bodens des Behälters (1) aufgebaut ist und sich mit einer höheren Rotationsgeschwindigkeit als der des ersten Rührorgans (8) derart dreht, daß die Fermentationszeit des Vorteigs verkürzt wird.

2. Maschine gemäß Anspruch 1, **dadurch gekennzeichnet, daß** die Rotationsgeschwindigkeit des zweiten Rührorgans (17) zwischen ungefähr 500 U/Min. und ungefähr 3000 U/Min. inbegriffen ist und der des ersten Rührorgans (8) in der Größenordnung von 5 bis 30 U/Min. liegt.

3. Maschine gemäß Anspruch 1 oder 2, **dadurch gekennzeichnet, daß** das zweite Rührorgan (17) einen Aussendurchmesser hat, der zwischen 0.2 und 0.6 Mal des Innendurchmessers des Behälters (1) inbegriffen ist.

4. Maschine gemäß einem der vorgenannten Ansprüche, **dadurch gekennzeichnet, daß** das zweite Rührorgan (17) unabhängig vom ersten Rührorgan (8) ist und wenigstens ein Rad (17) umfaßt, das deutlich parallel zum Boden des Behälters (1) ist und dessen Rotationsachse (18) senkrecht zu diesem Boden ist.

5. Maschine gemäß Anspruch 4, **dadurch gekennzeichnet, daß** das vorgenannte zweite Rührorgan ein anderes, mit dem vorgenannten Rad gekoppeltes Rad (17) umfaßt.

6. Maschine gemäß Anspruch 4 oder 5, **dadurch gekennzeichnet, daß** das Rad (17) eine Nabe (19) umfaßt und peripherische, fest mit der Nabe (19) verbundene Zähne (20), die sich senkrecht, alternativ nach oben und nach unten zu dieser Nabe erstrecken.

7. Maschine gemäß Anspruch 6, **dadurch gekennzeichnet, daß** die Nabe (19) des Rades (17) eine bestimmte Anzahl durchquerender Löcher (22) umfaßt, die sich deutlich gemäß einer selben Peripherie erstrecken.

8. Maschine gemäß Anspruch 7, **dadurch gekennzeichnet, daß** die Löcher (22) jedes die Form einer länglichen Öffnung haben, deren zwei äußere Enden verschiedene Durchmesser haben.

9. Maschine gemäß Anspruch 4 bis 8, **dadurch gekennzeichnet, daß** das Rad (17) von einer Antriebswelle (21) getragen wird, die die Bodenwand (1a) des Behälters (1) durchquert und durch einen Getriebemotor (23) angetrieben wird, der fest mit der Außenseite der Bodenwand (1a) des Behälters verbunden ist und daß das erste Rührorgan (8) eine Stützwelle (10) zweier identischer, paralleler, gegenüberliegender, im Verhältnis zum Behälter (1) zentrierter Abschabblätter (15) umfaßt und abnehmbar auf einer Motorwelle (11) befestigt ist, die in Rotation in einem Gehäuse (12) angebracht ist, das sich im oberen Teil des Behälters (1) radial zu diesem erstreckt und einen Verbindungsmechanismus der Motorwelle (11) mit einem anderen Getriebemotor (13) enthält, der fest mit dem Tragelement (2) der Maschine verbunden ist.

10. Maschine gemäß Anspruch 9, **dadurch gekennzeichnet, daß** die Motorwelle (21) des Rades (17) im Verhältnis zum Behälter (1) derart zentriert ist, daß das Rad (17) konzentrisch zum ersten Rührorgan (8) ist.

11. Maschine gemäß Anspruch 9, **dadurch gekennzeichnet, daß** die Motorwelle (21) des Rades (17) im Verhältnis zum Behälter (1) versetzt ist.

## Claims

1. A machine for manufacturing and storing liquid natural leaven obtained from raw materials based on water and flour, comprising a fixed cylindrical vessel (1) into which the raw materials are introduced and which is equipped with a stirring device for stirring the raw materials and means (6) for discharging the manufactured leaven, the stirring device comprising a first rotary stirring member (8) also arranged to scrape the internal wall and a part of the bottom of the vessel (1) and a second rotary stirring member (17), **characterised in that** the second stirring member (17) is mounted for rotation in the vicinity of the bottom of the vessel (1) and rotates at a speed of rotation greater than that of the first stirring member (8) so as to reduce the fermentation time of the leaven.

2. A machine according to Claim 1, **characterised in that** the speed of rotation of the second stirring member (17) is between approximately 500 revolutions/min and approximately 3000 revolutions/min and that of the first stirring member (8) is around 5 to 30 revolutions/min.

3. A machine according to Claim 1 or 2, **characterised in that** the second stirring member (17) has an outside diameter of between 0.2 and 0.6 times the inside diameter of the vessel (1).

4. A machine according to one of the preceding claims, **characterised in that** the second stirring member (17) is independent of the first stirring member (8) and comprises at least one wheel (17) substantially parallel to the bottom of the vessel (1) and whose axis of rotation (18) is perpendicular to this bottom.

5. A machine according to Claim 4, **characterised in that** the aforementioned second stirring member comprises another wheel (17) twinned with the aforementioned wheel.

6. A machine according to Claim 4 or 5, **characterised in that** the wheel (17) comprises a hub (19) and peripheral teeth (20) fixed to the hub (19) extending perpendicularly to this hub alternately upwards and downwards.

7. A machine according to Claim 6, **characterised in that** the hub (19) of the wheel (17) comprises a certain number of through orifices (22) lying substantially on the same circumference.

8. A machine according to Claim 7, **characterised in that** the orifices (22) each have the form of an oblong slot, the two ends of which have different diameters.

9. A machine according to one of Claims 4 to 8, **characterised in that** the wheel (17) is carried by a drive shaft (21) passing through the bottom wall (1a) of the vessel (1) and driven by a motor/gearbox unit (23) fixed to the external face of the bottom wall (1a) of the vessel and **in that** the first stirring member (8) comprises a support shaft (10) for two identical opposite parallel scraper blades (15), centred with respect to the vessel (1) and removably fixed to a drive shaft (11) mounted for rotation in a casing (12) extending at the upper part of the vessel (1) radially thereto and containing a mechanism for connecting the drive shaft (11) to another motor/gearbox unit (13) fixed to the frame (2) of the machine.

10. A machine according to Claim 9, **characterised in that** the drive shaft (21) of the wheel (17) is centred with respect to the vessel (1), so that the wheel (17) is concentric with the first stirring member (8).

11. A machine according to Claim 9, **characterised in that** the drive shaft (21) of the wheel (17) is off-centre with respect to the vessel (1).
